# EUROPEAN PATENT APPLICATION

(11) **EP 1 157 891 A2**
(43) Date of publication of application: **28.11.2001**
(21) Application number: 01112609.1
(22) Date of filing: 23.05.2001
(51) Int. Cl.: B60R 13/02, B60R 21/04

(54) **Covering member for a structural member of a vehicle**

(30) Priority: 23.05.2000 IT TO000080 U
(71) Applicant: SELMAT AUTOMOTIVE S.R.L., 10090 Cascine Vica - Rivoli (IT)
(72) Inventor: Maccherrone, Michele c/o Selmat Automotive S.r.l., 10090 Cascine Vica-Rivoli (IT)
(74) Representative: Eccetto, Mauro

(57) **Abstract**

A covering member (5) for a structural member (4) of a vehicle (1) having a passenger compartment (3) defined by the structural member (4); the covering member (5) having a supporting surface (21) positioned facing the structural member (4), and an outer surface (22) extending on the opposite side to the supporting surface (21); and the covering member (5) having a first layer (23) extending between the supporting surface (21) and the outer surface (22) and made of shock-absorbing material; and a second layer (25) for at least partly covering the first layer (23) and at least partly defining the outer surface (22).

## Description

The present invention relates to a covering member for a structural member of a vehicle, and in particular for the frame portions inside the passenger compartment of the vehicle, such as the front and rear lateral posts partly defining the doors and/or windows of the vehicle, and the upper cross members and rails defining part of the roof.

Frame portions of the above sort visible from inside the passenger compartment of the vehicle are normally fitted with contoured covering members made of plastic material to enhance the interior finish of the passenger compartment and protect the frame from wear and external agents.

In the case of vehicles in which the occupants of the passenger compartment are not required to wear crash helmets, covering members of the above sort are unsatisfactory in terms of safety by being fairly rigid and failing to cushion the impact of the occupants against the vehicle frame, particularly when braking sharply or in the event of an accident.

It is an object of the present invention to provide a covering member for a structural member of a vehicle, designed to provide a straightforward, low-cost solution to the above problem, and which, in particular, performs an aesthetic function while at the same time protecting the occupants of the passenger compartment in the event of impact against the covered structural member.

According to the present invention, there is provided a covering member for a structural member of a vehicle comprising a passenger compartment defined by said structural member; the covering member comprising a supporting surface positioned facing said structural member to be covered, and an outer surface extending on the opposite side to said supporting surface; and being characterized by also comprising a first layer extending between said supporting surface and said outer surface and made of shock-absorbing material; and a second layer for at least partly covering said first layer and at least partly defining said outer surface.

A non-limiting embodiment of the invention will be described by way of example with reference to the accompanying drawings, in which:
Figure 1 shows a preferred embodiment of the covering member for a structural member of a vehicle according to the present invention and applied, in particular, to a post inside the passenger compartment of the vehicle;
Figure 2 shows a larger-scale section, with parts removed for clarity, along line II-II in Figure 1;
Figures 3 and 4 show the same view as in Figure 2 and two variations of the Figure 2 covering member as regards connection to the post.

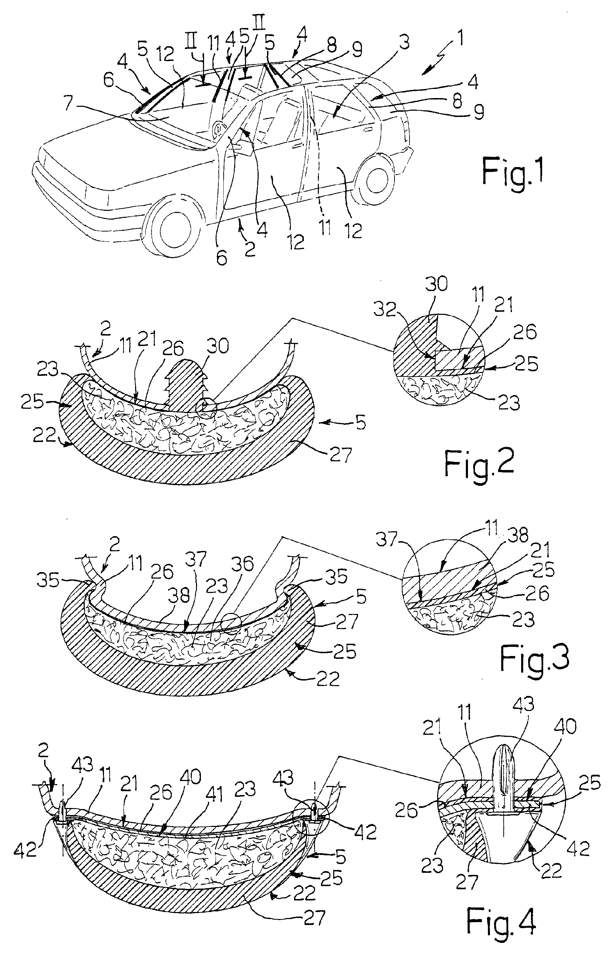

Number 1 in Figure 1 indicates a vehicle (shown schematically), in particular a car, comprising a rigid, normally metal supporting structure or frame 2; and a passenger compartment 3 defined by various portions 4 of frame 2 covered with respective members 5 inside passenger compartment 3.

Here and hereinafter, portions 4 are intended to mean the parts of frame 2 facing inwards of passenger compartment 3 and with which the occupants of passenger compartment 3 may collide, particularly when braking sharply or in the event of an accident involving vehicle 1. For example, portions 4 are intended to mean the front posts 6 defining windscreen 7; the rear posts 8 defining the rear side windows 9; the intermediate lateral posts 11 between the side doors 12; and the cross members and rails forming part of the roof (not shown).

With reference to Figure 2 showing a cross section of a post 11, member 5 is defined by a surface 21 facing post 11, and by an outer surface 22 extending on the opposite side to surface 21, i.e. facing passenger compartment 3, and comprises a core 23 made of shock-absorbing, controlled-deformation material, i.e. having a composition or physical parameters, e.g. density, which can be varied during fabrication to obtain the desired shock-absorbing characteristics.

More specifically, core 23 is made of foam material, preferably polyurethane foam, e.g. of the type known as "Bayfill" (registered trademark), or polypropylene foam (PPE), or materials known as "Noril" and "Karil" (registered trademarks).

Core 23 is covered entirely with a layer 25 made, in particular, of polyurethane material, preferably the integral or flexible type, and co-molded with core 23. Layer 25 comprises a rear film 26 defining surface 21; and a front portion 27 defining surface 22 to enhance the look and feel of member 5 in use, and of a thickness, between surface 22 and core 23, greater than that of film 26 and equal to about 5-6 mm.

In one variation, layer 25 comprises a portion 27 made of cloth.

In another variation, layer 25 is made of thermoformed plastic material, preferably polypropylene, or a mixture of PVC and ABS, or a material known by the trade name "TPO" (registered trademark).

With reference to Figure 2, member 5 is connected to post 11 by a number of pins 30 (only one shown in Figure 2), which are aligned along member 5 and post 11, project in one piece from film 26, extend through respective holes 32 formed along post 11, and click into holes 32 so that surface 21 is maintained contacting post 11.

In the Figure 3 variation, pins 30 are dispensed with, and member 5 comprises, in cross section, two lateral projections 35, which project from opposite sides of an intermediate portion 36, and define, with intermediate portion 36, a seat 37 into which clicks a portion 38 of post 11 complementary with seat 37.

In the Figure 4 variation, member 5 is embedded with a number of metal brackets 40 (only one shown in Figure 4) spaced longitudinally apart along member 5. More specifically, each bracket 40 comprises an intermediate portion 41 embedded in core 23; and two opposite end portions 42, which are covered with layer 25 and have holes by which they are connected integrally to post 11 by means of respective press-on fastening elements 43, or by means of screws or rivets.

Core 23, given the material from which it is made, therefore defines a layer ensuring a fairly high degree of safety of the occupants of passenger compartment 3 as regards collision with portions 4, while portion 27 greatly enhances the look of member 5 and passenger compartment 3.

Portion 27, in fact, makes member 5 extremely soft to the touch and attractive in appearance by covering the rough and/or grainy consistency and look of the foam material of which core 23 is made.

Moreover, the fact that core 23 is enclosed entirely in layer 25 makes member 5 relatively compact, and the materials used enable the formation of extremely lightweight members 5.

Moreover, when assembling vehicle 1, members 5 can be fitted quickly and easily, particularly the types which click onto respective portions 4.

Clearly, changes may be made to covering member 5 as described and illustrated herein without, however, departing from the scope of the present invention.

In particular, members 5 may be fitted to respective portions 4 of frame 2 otherwise than as shown, and/or may be shaped otherwise than as shown, depending on the shape of the portions 4 to be covered; while layer 25 may cover only part of core 23 and/or define only part of surface 22.

Core 23 may be made of material other than those indicated, providing it is shock-absorbing and of controlled deformation, such as elastomeric material. And portion 27 may also be made of material other than those indicated, e.g. highly attractive polymer material such as "artificial leather", and/or may perform not only a decorative but also a shock-absorbing function in conjunction with core 23.

Finally, members 5 may be fitted to structural members of a vehicle other than the one shown.

## Claims

1. A covering member (5) for a structural member (4) of a vehicle (1) comprising a passenger compartment (3) defined by said structural member (4); the covering member (5) comprising a supporting surface (21) positioned facing said structural member (4) to be covered, and an outer surface (22) extending on the opposite side to said supporting surface (21); and being **characterized by** also comprising a first layer (23) extending between said supporting surface (21) and said outer surface (22) and made of shock-absorbing material; and a second layer (25) for at least partly covering said first layer (23) and at least partly defining said outer surface (22).

2. A covering member as claimed in Claim 1, **characterized in that** said first layer (23) and said second layer (25) are co-molded.

3. A covering member as claimed in Claim 1 or 2, **characterized in that** said shock-absorbing material is a foam material.

4. A covering member as claimed in Claim 3, **characterized in that** said foam material is polypropylene foam.

5. A covering member as claimed in Claim 3, **characterized in that** said foam material is a polyurethane material.

6. A covering member as claimed in any one of the foregoing Claims, **characterized in that** said outer surface (22) completely defines said second layer (25).

7. A covering member as claimed in any one of the foregoing Claims, **characterized in that** said second layer (25) completely surrounds said first layer (23).

8. A covering member as claimed in any one of the foregoing Claims, **characterized in that** said second layer (25) is made of polyurethane material.

9. A covering member as claimed in any one of Claims 1 to 7, **characterized in that** said second layer (25) is made of cloth.

10. A covering member as claimed in any one of the foregoing Claims, **characterized by** comprising fastening means (30; 35; 40) for maintaining said supporting surface (21) connected integrally to said structural member (4); said fastening means (30; 35; 40) being integral with at least said first layer (23) or said second layer (25).

11. A covering member as claimed in Claim 10, **characterized in that** said fastening means (30; 35; 40) comprise at least one projecting portion (35; 40) formed in one piece with at least said first layer (23) or said second layer (25), and which clicks onto said structural member (4).

12. A covering member as claimed in Claim 9, **characterized in that** said fastening means (30; 35; 40) comprise a bracket (40) embedded in at least said first layer (23) or said second layer (25).
